Europäisches Patentamt

(19) European Patent Office

Office européen des brevets

(11) Publication number: **0 034 571**
**A2**

(12) **EUROPEAN PATENT APPLICATION**

(21) Application number: **81830002.2**

(22) Date of filing: **05.01.81**

(51) Int. Cl.³: **G 01 G 19/56**

(30) Priority: **14.02.80 IT 5294180 U**

(43) Date of publication of application:
**26.08.81 Bulletin 81/34**

(84) Designated Contracting States:
**AT BE CH DE FR GB IT LI LU NL SE**

(71) Applicant: **HOGAR S.r.l.**
**Via Bologna 220**
**I-10154 Torino(IT)**

(72) Inventor: **Altissimo, Mario**
**Strada Val San Martino Inferiore 45**
**I-10131 Torino(IT)**

(74) Representative: **Jacobacci, Filippo et al,**
**c/o Jacobacci-CASETTA & PERANI S.n.c. Via Alfieri, 17**
**I-10121 Torino(IT)**

(54) **Ladle shaped balance.**

(57) A dynamometric balance comprises an elongate body (1) serving as a handle, a dynamometric device (2) contained within the body (1) and in turn comprising an oscillatory arm (3) projecting from one end of the body (1), elastic means (9) to return the oscillatory arm (3) to a raised position and scale means (14, 16) to indicate the weight corresponding to each position of the oscillatory arm (3), and a receptacle (5) in the form of a scoop or ladle connected to the oscillatory arm (3).

FIG. 1

EP 0 034 571 A2

Croydon Printing Company Ltd.

- 1 -

"Ladle shaped balance"

The present invention relates to balances. In particular the invention concerns dynamometric balances, that is weighing devices suitable for measuring a force by registering the deformation of an elastic element.

The object of the invention is to produce a dynamometric balance which is simple and comfortable to use.

In order to achieve this object, the present invention provides a dynamometric balance, the main characteristic of which lies in the fact that the balance comprises an elongate body which serves as a handle, a dynamometric device contained in the body and in turn comprising an oscillatory arm projecting from one end of the body, elastic means to return the oscillatory arm to a raised position and scale means to show the weight corresponding to each position of the oscillatory arm, and a receptacle in the form of a scoop or ladle connected to the oscillatory arm.

By virtue of the aforesaid characteristic, the balance according to the present invention may be used as a simple scoop or as a ladle to take up the material to be weighed and, simultaneously, as a balance proper capable of effecting the weighing operation.

The invention will now be described with reference to the annexed drawings, supplied purely by way of nonlimiting example, in which:

Figures 1 and 2 are two perspective views of a dynamometric balance according to the present invention;

Figure 3 is a sectional view of the balance in Figure 1, and,

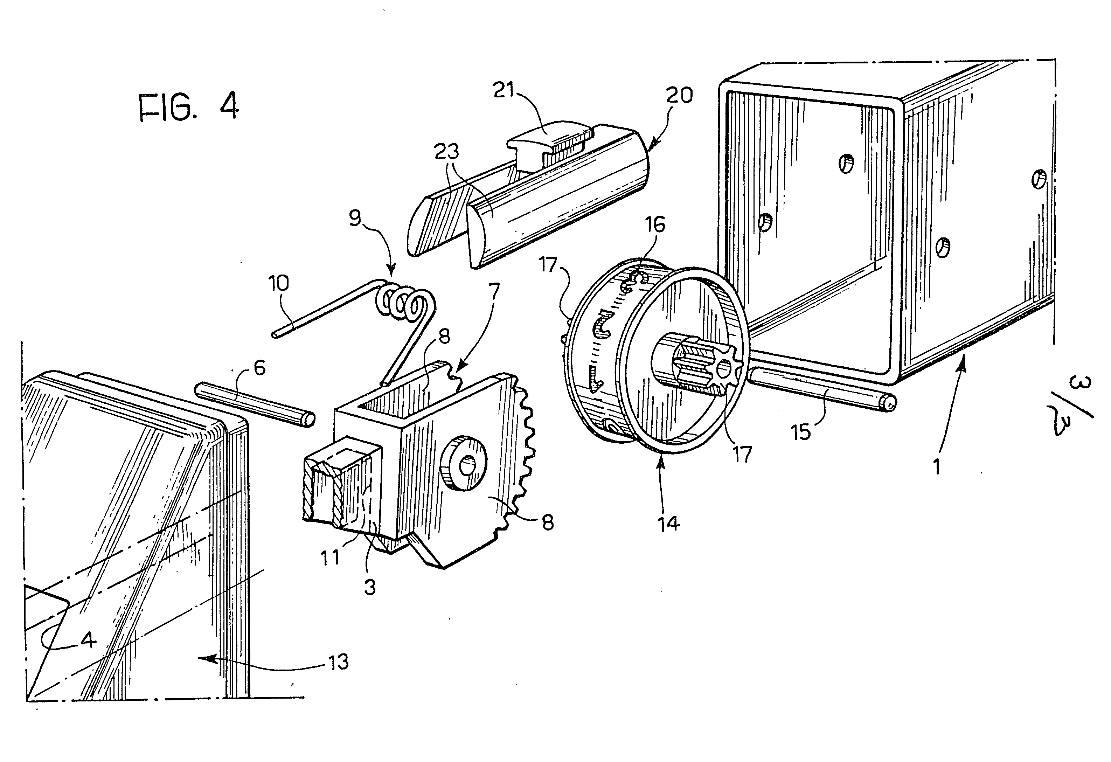

Figure 4 is an exploded perspective view on an enlarged scale of a detail of the balance of Figure 1.

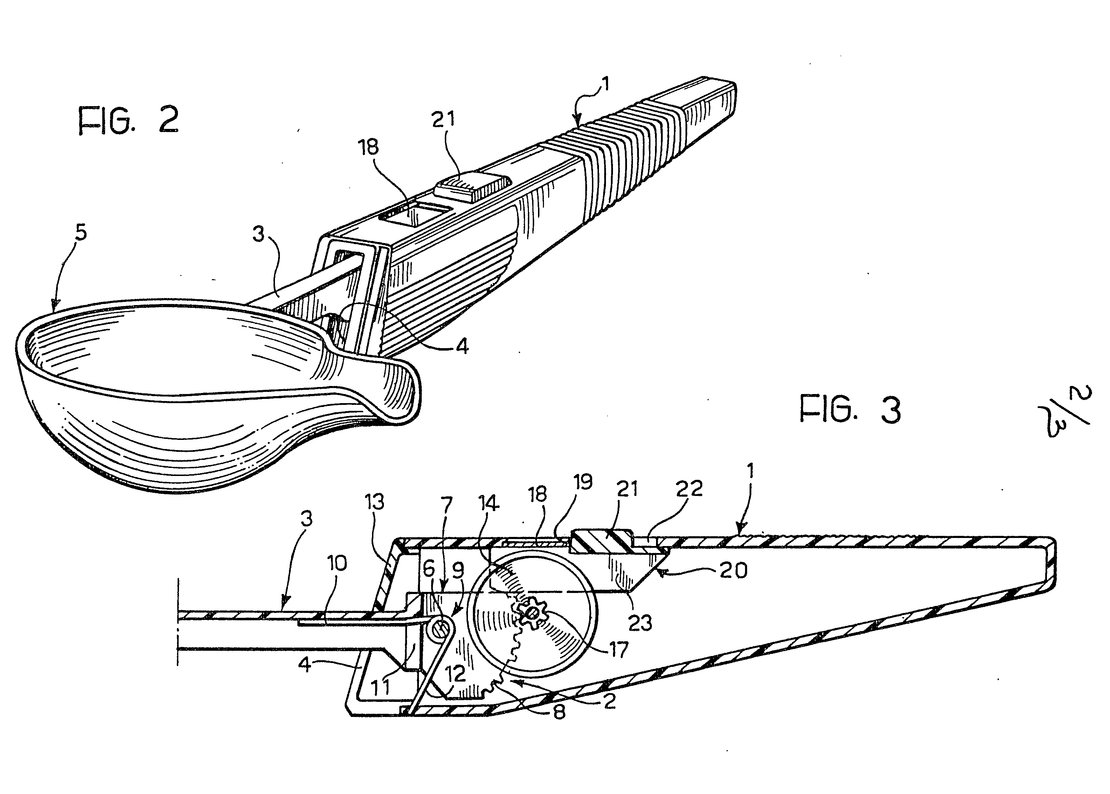

The dynamometric balance which is the subject of the present invention comprises an elongaged body 1 which serves as a handle, within which is contained a dynamometric device, indicated generally by reference numeral 2 in Figure 3, which in turn includes an oscillatory arm 3 projecting through a slot 4 from one end of the body 1, which serves as a handle.

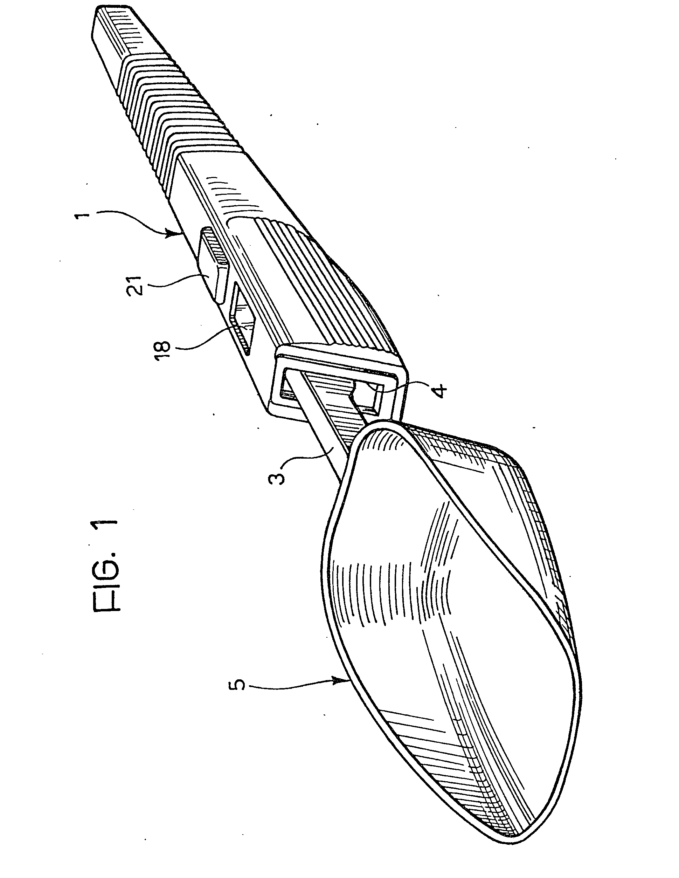

The oscillatory arm 3 is connected to a receptacle 5 which may be in the form of a scoop (see Figure 1) where it is intended to receive solid material, or in the form of a ladle (see Figure 2), where it is intended to receive liquid material. The receptacle 5 may be fixed non-detachably to the oscillatory arm 3, or it may be detachably connected to the arm, thus enabling it to be replaced by a receptacle of another shape.

That end of oscillatory arm 3 which is disposed within the body 1 which serves as a handle is articulated about a pin 6 fixed within the body 1. This end is moreover defined by a forked element 7 the two arms of which are in the form of toothed sectors 8 having their axes coincident with the pivot axis of the oscillatory arm 3. A pin spring 9 is mounted on the pivot pin 6 and has an end 10 inserted in a slot 11 of the forked element 7 and acting on the oscillatory arm 3, and an end 12 bearing against the internal surface of body 1 which serves as a handle. The spring 9 urges the oscillatory arm 3 to the raised position shown in Figure 3, delimited by the upper edge of slot 4. This slot is cut within a separate element 13 fitted into one end of body 1, in such a way as to enable the dynamometric device 2 to be mounted within the latter.

A drum 14 is mounted rotatably within the body 1 around a pin 15 parallel to the pin 6.

On its side face the drum 14 carries a graduated scale 16 ·to indicate the weight corresponding to each position of the oscillatory arm 3. Two toothed sprockets 17 project coaxially from the two opposite surfaces of drum 14 and mesh with the two toothed sectors 8 carried on the internal end of the oscillatory arm 3.

The body 1 which serves as a handle is provided with a small window 18 for reading the graduated scale 16. This window is formed by a transparent plastics element inserted in an opening 19 made in the wall of the body 1.

An element 20 capable of locking the oscillatory arm 3 in its raised position is also disposed within the body 1. The element 20 comprises a part 21 projecting outside the body 1 and serving as an operating button which is mounted slidably in an opening 22 made in the wall of body 1. The part 21 is provided with two appendages 23 projecting into the body 1 and arranged to be interposed (see Figure 3) between toothed sectors 8 and the internal surface of the upper wall of the body in such a way as to lock the element 7 in the position corresponding to the arrest of the oscillatory arm 3 in its raised position. By operating the button 21 it is possible to displace the element 20 between an engaged position, as illustrated in Figure 3, in which the aforesaid appendages 23 are interposed between the toothed sectors 8 and the wall of body 1, and a disengaged position corresponding to the abutment of operating button 21 against the rear edge of the opening 22, in which arm 3 is free to pivot.

The dynamometric balance as described above may be used as a simple ladle or scoop to take up the material which is to be weighed. Before taking up the material it is necessary to move the operating button 21 to the forward position illustrated in Figure 3 corresponding to the locking of the oscillatory arm 3.  Once the oscillatory arm 3 and the receptacle 5 have been rigidly locked relative to body 1 which serves as a handle, the balance forms a rigid body capable of serving as a scoop or ladle to take up the material.  When the material has been taken up, the operating button 21 is moved to its rearward position, in such a way as to enable arm 3 to swing freely in order to effect the weighing of the material contained in the receptacle 5 with consequent deformation of the spring 9.  The value of the weight is read through the small window 18 on the graduated scale 16 carried on drum 14.

It is therefore apparent that the balance according to the present invention enables a simplified, more comfortable and easier weighing operation.

CLAIMS

1. Dynamometric balance, characterised in that it comprises an elongate body (1) serving as a handle, a dynamometric device (2) contained within the body (1) and in turn comprising an oscillatory arm (3) projecting from one end of the body (1), elastic means (9) to return the oscillatory arm (3) to a raised position and scale means (14, 16) to indicate the weight corresponding to each position of the oscillatory arm (3), and a receptacle (5) in the form of a scoop or ladle connected to the oscillatory arm (3).

2. Balance according to Claim 1, characterised in that the body (1) serving as a handle is provided with retention means to lock the oscillatory arm (3) in its raised position.

3. Balance according to Claim 1, characterised in that the receptacle (5) is fixed to the oscillatory arm (3).

4. Balance according to Claim 1, characterised in that the receptacle (5) is detachably connected to the oscillatory arm (3) to enable the substitution of a receptacle of another form.

5. Balance according to Claim 1 or 2, characterised in that the end of the oscillatory arm (3) disposed within the body (1) serving as a handle is articulated to said body (1) and is joined to an element which is in the form of a toothed sector (7) having its axis coincident with the articulation axis of the oscillatory arm (3), and in that the said scale means comprise a rotatable drum (14) bearing on its side face a graduated scale (16), and engaging with the said element (7) in the form of a toothed sector.

6. Balance according to Claim 5, characterised in that the said elastic return means comprise a pin spring (9) mounted on a pivot pin (6) of the oscillatory arm (3) and with its ends acting respectively on the floating arm (3) and on body (1) which serves as a handle.

7. Balance according to Claim 5, characterised in that the said body (1) which serves as a handle is provided with a small window (18) for reading the graduated scale (16) carried on the said drum (14).

8. Balance according to Claim 5, characterised in that the said drum (14) is joined to two toothed sprockets (17) projecting coaxially from the two opposite faces of the drum (14), in that the aforesaid toothed sector element is constituted by a fork element (7) the two arms (8) of which are in the form of toothed sectors and mesh with the said toothed sprockets (17).

9. Balance according to Claims 2 and 5, characterised in that the said retaining means comprise a retaining element (20) displaceable within the body (1) which serves as a handle between an engaged position in which it is interposed between the toothed sector element (7) and the internal surface of the body (1), so as to lock the oscillatory arm (3) in its raised position, and a disengaged position in which it permits the oscillatory arm (3) to swing freely; this retaining element (20) being provided with a part which projects outside the body (1) which serves as a handle to form an operating button (21) for the displacement of the said retaining element (20).

FIG. 1

1/3

0034571

FIG. 2

FIG. 3

FIG. 4

3/3

0034571